# EUROPEAN PATENT APPLICATION

(11) **EP 4 614 315 A1**
(43) Date of publication of application: **10.09.2025**
(21) Application number: 24162093.9
(22) Date of filing: 07.03.2024
(51) Int. Cl.: G06F 8/65

(54) **DETERMINING RISK OF CHANGES TO A COMPUTING ENVIRONMENT**

(71) Applicant: Barclays Execution Services Limited, London, Greater London E14 5HP (GB)
(72) Inventor: BALL, Lewis, London, E14 5HP (GB); BUTTERS, Tim, London, E14 5HP (GB)
(74) Representative: Carpmaels & Ransford LLP

(57) **Abstract**

A computer-implemented method for flagging risk when handling updates to a computing environment is disclosed. The method includes receiving a change request comprising one or more change features associated with a change in hardware and/or software within the computing environment, and receiving a change record associated with the change request, the change record comprising one or more fields corresponding to the one or more change features. The method further includes calculating a risk score for the change by applying a trained predictive model to the one or more fields, the predictive model having been trained on a dataset comprising historical changes to the computing environment and their associated historical change records. If the calculated risk score is above a predetermined threshold, a flag is raised to the change request to notify a user

## Description

### Technical Field

The present disclosure relates generally to handling updates to a computer environment, and in particular, to processing a change record associated with the change request with machine learning techniques to determine a level of risk in implementing the change request, the level of risk being a score indicative of a likelihood of a computing environment failure or malfunction.

### Background

In a typical computing environment, it is necessary from time to time to implement new software updates, which can include configuring a piece of hardware to operate in a different way, and/or new hardware updates. As an example, to make such an update to software, it can occasionally be necessary to reboot the hardware infrastructure (e.g. rebooting a server) so that the new software can be installed.

However, there are risks associated with rebooting hardware infrastructure and updating hardware and/or software in general, which can include unexpected server downtime - during which the server (and the software running on the server) is unavailable to access. Moreover, in an environment where external users access software running on said server, it is important that any software and/or hardware update does not lead to any malfunctions (also known as bugs or faults) in the software.

Thus, it is important to have mechanisms for determining any potential negative effects associated with software and hardware updates in advance of implementing the software or hardware change.

US 2022-0405397A1 is concerned with the detection of supply chain-related security threats to software applications. It provides a method that includes identifying differences between updated source code and previous source code (where the updated source code corresponds to an updated version of an application and the previous source code corresponds to a previous version of the application). A risk score is determined for the updated version based on a machine learning (ML) risk model that analyses the differences between the updated source code and the previous source code. The risk score value corresponds to potential security threats that are associated with the updated version, and not associated with the previous version of the application. The risk score is provided to interested parties.

US20230004486A1 describes a system that can identify data stored in repositories that indicate changes in the version of the application relative to a prior version of the application tested or deployed before receipt of the request to test the performance of the version of the application. The system can determine, based on the data and using machine learning with historical data associated with applications tested or deployed to test performance of the version, and without execution of the tests, a score for a plurality of tests that test performance of the version of the application. The system can select, based on the scores, a subset of the tests to execute, and provide an indication of the selected subset of the tests to cause execution of the subset of the tests to evaluate performance of the version of the application prior to deployment of the version of the application.

One drawback to such approaches is the high amount of complexity and specificity required for the respective machine learning models, particularly due to the requirement to process differences between two versions of code, which are written in a certain programming language. Moreover, such approaches also are only applicable to incremental software updates (and are therefore entirely unsuitable for hardware changes). The models also require an extensive amount of training to capture the purpose and risk of the update, especially outside of a specific software application.

The present invention seeks to overcome these drawbacks, and reduce the processing required for determining risk of a software change, including non-incremental software updates. Additionally, the present invention seeks to be able to determine risk of a hardware change.

### Summary

The present invention is defined by the independent claims, with further optional features being defined by the dependent claims.

In a first aspect of the invention, there is provided a computer-implemented method for flagging risk when handling updates to a computing environment, the method comprising: receiving a change request comprising one or more change features associated with a change in hardware and/or software within the computing environment, receiving a change record associated with the change request, the change record comprising one or more fields corresponding to the one or more change features, wherein the one or more fields corresponding to the one or more change features characterise the change in hardware and/or software within the computing environment; calculating a risk score for the change by applying a trained predictive model to the one or more fields, the predictive model having been trained on a dataset comprising historical changes to the computing environment and their associated historical change records, wherein the risk score is indicative of a likelihood of change-induced computing environment failure or malfunction; and if the calculated risk score is above a predetermined threshold, raising a flag to the change request to notify a user.

Such a process is advantageous because it provides a mechanism for highlighting risky updates in hardware and/or software. Put another way, the predictive model of the present invention can be taught to learn relationships between fields in a change record and a likelihood of a failure or malfunction of the hardware and/or software to which the change record relates.

It may be understood that a change request refers to instructions (or code) for initiating a change to the computing environment (such as a software update to a server).

Furthermore, the use of change features in a change record as the inputs to a machine learning model is improved over the known solutions (which may involve using entire portions of source code differences as machine learning model inputs). Compared to such source code comparison software, the predictive model can provide adequate prediction and classification regarding whether a certain set of input features is likely to cause a malfunction or failure, without needing to extensively process a comparison of software features.

For the avoidance of doubt, a predictive model can include one or more machine learning models (such as a neural network). The model can first be *"trained",* by using labelled input and output training data (e.g. a set of inputs, each with a known output, or label), so as to learn a certain relationship between the input and output training data. The prediction model can then be utilised to predict a new output on the basis of a new input. In view of this, the types of training data used to train the classification model define the sorts of relationships which can be learned. In other words, the input training data is in the same format as the input data to the trained model. Thus, the predictive model is trained by applying fields in a change record, which are labelled, to an untrained model.

Since the model is trained on previous events, the labels of the training data are the actual results of a historical change (since it will be known whether the historical change did cause a failure or malfunction). Accordingly, the predictive model can be used to predict whether a new change request will cause a failure or malfunction (i.e. an outcome prediction). In addition, a risk score can be calculated. The risk score can be an indication of how confident the model is that the outcome prediction is correct (e.g. there is a 75% chance that the change request will cause a failure or malfunction).

With the above in mind, the trained predictive model is suitable for receiving fields in a change record as inputs, and outputting a risk score (e.g. a likelihood of a failure or disruption of the software/hardware resulting from implementing such a change).

The advantage of such a method is that the predictive model can learn to detect fields (or a combination of fields) which may lead to increased risk. Such an analysis may not be possible for a human to extract, based on the complexity of software/hardware change requests, which may impact multiple sub-features in the code/hardware.

In some embodiments, the one or more fields in the change record include at least one of: a change category, whether a product or disaster recovery is impacted, a number of computing environment portions impacted by the respective change, a number of computing environment user groups impacted by the respective change, a number of assignees or assignee groups of the respective change, a number of configuration items within the computing environment impacted by the respective change, a number of service offerings in the computing environment affected by the respective change, a number of services in the computing environment impacted by the respective change, a number of approval services in the computing environment impacted by the respective change, a highest resilience level of a service affected by the respective change, a highest criticality level of an application affected by the respective change, a fraction of previous unsuccessful changes associated with the assignee or assignee group requesting the respective change, a number of previous changes carried out by the assignee or assignee group requesting the respective change, an indication of whether the change is an automated change, and a number of recent incidents associated with changes associated with the assignee or assignee group requesting the respective change.

The above change features (and the associated change records) relate to different features impacted by the change request. The change record can be manually provided by a user along with the change request, or the change record can be filled automatically by a computer program that analyses the change request.

In some embodiments, a change category is one of: adding or installing; user permissions; third party related; retiring or decommissioning; resource uplift; reboot, recycle, restart, physical access, patching, and application install.

By specifically flagging certain change categories in a change record, the accuracy of the predictive model can be improved. These certain categories have shown to have an improvement on the accuracy, because they relate to a broad type of software and/or hardware change which can have a strong correlation with a risk of an upgrade.

In some embodiments, the method further comprises determining, based on the calculated risk score for the change associated with the change request, a risk level of the change identified by the change request.

In some embodiments, determining the risk level of the change identified by the change request comprises determining the risk level as one of: high risk, medium risk, low risk, and minimal risk by comparing the calculated risk score against one or more predetermined thresholds.

Based on a certain risk score, a certain risk level (e.g. high risk, low risk, etc.) can be determined. Accordingly, each of the risk levels can be managed differently by the computer, resulting in different user actions. For example, a low risk determination may result in no delay in implementing the change request, whilst a medium risk determination or higher may result in a notification to the user (e.g. a flag).

In some embodiments, each risk level is associated with a corresponding predetermined lead time, and the method further comprises determining a lead time for the change associated with the change request based on the determined risk level.

"Lead time" may refer to a time delay between the change request being received, and the change request being implemented (i.e. the requested changes to hardware and/or software being executed). In this instance, the "lead time" can be a parameter enforced by the change management system itself (i.e. the computer can prevent a change request from being implemented, before the recommended lead time has elapsed).

With changes to a computing environment, particularly ones which can result in significant implications if implemented poorly, a balance needs to be struck between allowing appropriate time for reviewing and performing appropriate checks on the change request. The present invention provides a solution for enforcing such a process - for low risk change requests, there may be a short "lead time" (e.g. 24 hours) before the change request is implemented. This is because the consequences of implementing the change have been deemed by the predictive model to be fairly risk-free, and therefore, less testing needs to be enforced. On the other hand, where the changes in a change request are deemed to be "high risk" by the predictive model, a longer "lead time" (e.g. 2 weeks) can be enforced. This workflow ensures that a risky change request cannot be implemented without appropriate checks taking place, and allows for additional risk-mitigation procedures to be utilised.

All of this is advantageous for the end-user of the hardware/software in the computing environment, as it ensures that improvements to the computing environment can be rolled out as quickly as possible for low-risk changes, but more risky improvements can be rolled out in a way which reduces the likelihood of risk to the end-user.

In some embodiments, if it is determined that the risk level of the change identified by the change request is high risk, raising a flag comprises outputting a notification via a user interface.

Such a notification may be advantageous to make a user of the method aware of potential risks, which can then be remedied by intervention (replacing the change request, removing the change request from the queue, etc.).

In some embodiments, the predictive model comprises an Application Programming Interface (API) layer, the API layer being configured to enable one or more applications or services to perform at least one of: sending input data to the predictive model, retrieving results from the predictive model, monitor the performance of the predictive model, and adjust one or more parameters of the predictive model.

The predictive model can be configured for continuous learning, so as improve its own performance after every use. That is, the result of a change request (i.e. no issue or a computing environment failure/malfunction) can be fed back through the API layer so as to improve the predictive model, so that over time it can provide improved predictions.

In some embodiments, the predictive model is configured to perform a classification of the change request, the classification being a prediction of whether or not a change-induced computing environment failure or malfunction will occur, and the calculated risk score is a prediction accuracy metric corresponding to a confidence that a classification that a change-induced computing environment failure or malfunction will occur is correct.

By performing a classification of the change request with the predictive model, the predictive model can be used to predict whether a new change request will cause a failure or malfunction (i.e. an outcome prediction). The risk score can therefore be an indication of how confident the model is that the outcome prediction is negative (e.g. there is a 75% chance that the change request will cause a failure or malfunction).

In some embodiments, the method further comprises calculating a non-risk score for the change by applying the trained predictive model to the one or more fields, wherein the risk score is a second prediction accuracy metric corresponding to a confidence that a classification that a change-induced computing environment failure or malfunction will not occur is correct.

Whereas the risk score can be an indication of a confidence that a failure or malfunction will occur, the non-risk score can be the opposite: i.e. a confidence that no failure or malfunction could occur. As an example, the predictive model could predict that a failure will occur by implementing a certain change request. The risk score associated with this outcome prediction could be 95% (i.e. a high likelihood of confidence). Thus, the non-risk score would be 5% in this instance. Put another way, the sum of the risk score and the non-risk score should be 100%, because there are only two possible outcome predictions output by the predictive model.

In some embodiments, the predictive model comprises an boosting machine model, otherwise known as a gradient boosting machine.

A boosting machine refers to a tree-based, cyclic gradient boosting Generalized Additive Model with automatic interaction detection. It gives a prediction model in the form of an ensemble of weak prediction models, i.e., models that make very few assumptions about the data, which are typically simple decision trees. When a decision tree is the weak learner, the resulting algorithm is called gradient-boosted trees; it usually outperforms a random forest model.

In some embodiments the boosting machine model is an explainable boosting machine model (EBM).

An explainable boosting machine refers to a tree-based, cyclic gradient boosting Generalized Additive Model with automatic interaction detection. Explainability in machine learning refers to the ability to understand and interpret how a model makes predictions or decisions. Such models are accurate as state-of-the-art black box models while remaining completely interpretable. Such models are also extremely compact and fast at prediction time.

The advantage of such an explainable model is that feature importance can be clearly extracted, which allows for an improved knowledge over which fields of a change record (or combination of fields of a change record) were found to lead to more risky change requests.

The explainable aspect of the machine model is advantageous to highlight which features of the change record resulted in the risk score prediction.

In some embodiments, the historical changes to the computing environment and their associated historical change records that are used to train the predictive model have associated historical failure scores used to train the model.

In further embodiments, the historical failure scores are Boolean values indicating whether or not a respective historical change caused a change-induced computing environment failure or malfunction.

That is, it can be known whether a historical change did or did not cause a change-induced computing environment failure or malfunction, and therefore a Boolean value can be provided as a label to the training data (as historical failure scores).

In some embodiments, the historical failure scores are weighted based on an impact caused by the historical change.

For example, the model can be configured to predict whether or not a given change will go on to cause an incident. These predictions can be weighted by incident severity, and in the training process changes causing a major incident are given twice the weight of the other incidents). The target variable is a Boolean where each change is given a negative/positive value.

A negative change is defined as:
- Any change which is linked to an incident, with a planned start date before the incident opened date
- Any change which caused a problem record (A root cause analysis record done after an incident record is closed)
- Any change which was closed as 'Unsuccessful'

On the other hand, a positive change is defined as:
- Any change which has been closed as 'Successful'

In a second aspect of the invention, there is provided a computing environment comprising one or more computing systems communicatively coupled to each other; and at least one processing system configured to perform the steps of any of the above embodiments.

In a third aspect of the invention, there is provided a computer-readable medium comprising instructions which, when processed by at least one processing system, cause the processing system to perform the steps of any of the above embodiments.

### Brief Description of the Drawings

Embodiments of the invention are described below, by way of example, with reference to the following drawings, in which:
Figure 1 is a block diagram illustrating an overview of the computer-implemented method for flagging risk when handling updates to a computing environment.
Figure 2 is a flowchart depicting the steps of the computer-implemented method for flagging risk when handling updates to a computing environment.
Figure 3A is a schematic representation of a diagram showing a machine learning model during training.
Figure 3B is a schematic representation of the trained predictive model used in the method for calculating a risk score.
Figure 4 is a table showing examples of change features and their corresponding fields in a change record.
Figure 5 is a graph illustrating the relationship between calculated risk scores and predetermined thresholds for determining risk levels.
Figure 6A shows a computing device in which the methods of the invention may be implemented.
Figure 6B shows components of the system memory of the computing device of Figure 6A in further detail.
Figure 6C shows components of the storage media of the computing device of Figure 6A.
Figure 7 depicts a measure of feature importance extracted from an exemplary result of a trained explainable boosting model according to the present invention.
Figure 8A depicts a shape function for recent 'Major Incidents' feature against feature value.
Figure 8B depicts a density plot that shows the frequency at which a feature takes certain values.
Figure 9A depicts a shape function for 'Assignment Group Count' feature against feature value.
Figure 9B depicts a density plot that shows the frequency at which a feature takes certain values.
Figure 10 depicts the percentage of changes causing Major Incidents over time has decreased since the introduction of the machine learning change risk model.

### Detailed Description

The detailed description set forth below provides information and examples of the disclosed technology with sufficient detail to enable those skilled in the art to practice the disclosure.

The present disclosure provides a computer-implemented method for flagging risk when handling updates to a computing environment.

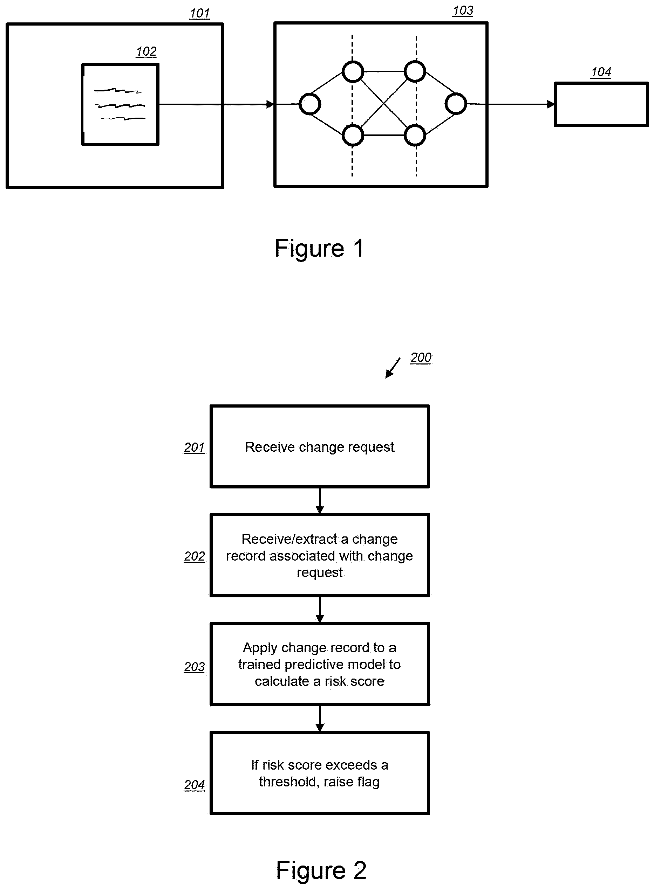

Figure 1 shows a block diagram illustrating an overview of the computer-implemented method for flagging risk when handling updates to a computing environment. The figure includes a change request 101 comprising one or more change features associated with a change in hardware and/or software within the computing environment. The change record 102 is associated with the change request and comprises one or more fields corresponding to the one or more change features. The trained predictive model 103 calculates a risk score for the change by applying the model to the one or more fields. If the calculated risk score is above a predetermined threshold, a flag 104 is raised to the change request to notify a user.

In this example, the method involves receiving a change request 101 comprising one or more change features associated with a change in hardware and/or software within the computing environment. The method also includes receiving a change record 102 associated with the change request, wherein the change record comprises one or more fields corresponding to the one or more change features. These fields characterise the change in hardware and/or software within the computing environment. The method further involves calculating a risk score for the change by applying a trained predictive model 103 to the one or more fields. The predictive model has been trained on a dataset comprising historical changes to the computing environment and their associated historical change records. The risk score is indicative of a likelihood of change-induced computing environment failure or malfunction. If the calculated risk score is above a predetermined threshold, the method raises a flag 104 to the change request to notify a user.

In some examples, the change request 101 is a formal request for a change in the computing environment, such as an update, modification, or addition to hardware and/or software components. The change request may include various change features that provide information about the proposed change, such as the type of change, the scope of the change, and the potential impact on the computing environment.

The change record 102 is associated with the change request and contains one or more fields corresponding to the one or more change features. These fields provide detailed information about the change and are used as inputs to the trained predictive model 103 for calculating the risk score.

The change features in the change request 101 may comprise various aspects of the proposed change, such as the change category, the impact on product or disaster recovery, the number of computing environment portions impacted, the number of user groups impacted, the number of assignees or assignee groups, the number of configuration items impacted, the number of service offerings affected, the number of services impacted, the number of approval services impacted, the highest resilience level of a service affected, the highest criticality level of an application affected, the fraction of previous unsuccessful changes, the number of previous changes carried out, the indication of whether the change is automated, and the number of recent incidents associated with changes.

The corresponding fields in the change record 102 provide detailed information about each change feature, which is used as input to the trained predictive model 103 for calculating the risk score. The method for flagging risk may comprise receiving additional or alternative change features and fields, depending on the specific requirements of the computing environment and the desired level of risk assessment.

The trained predictive model 103 is a key component of the computer-implemented method for flagging risk when handling updates to a computing environment. The model receives the fields in the change record 102 as inputs and outputs a risk score, which is indicative of the likelihood of change-induced computing environment failure or malfunction. The predictive model is trained on a dataset comprising historical changes to the computing environment and their associated historical change records, allowing the model to learn patterns and relationships between change features and the associated risk of failure or malfunction.

The predictive model according to the present invention may be implemented with an Explainable Boosting Machine (EBM) model, which implements boosted tree-based techniques. Such a model is a tree-based, cyclic gradient boosting Generalized Additive Model with automatic interaction detection.

The dataset used for training the predictive model 103 comprises historical changes to the computing environment and their associated historical change records. This dataset enables the model to learn patterns and relationships between change features and the associated risk of failure or malfunction, improving the accuracy and reliability of the calculated risk scores. The model may be periodically updated or retrained with new data to ensure that it remains current and relevant to the evolving computing environment.

The predictive model according to the present invention may be trained with any known training algorithms for supervised learning, including, e.g. a gradient boosting algorithm.

The method involves calculating a risk score for the change by applying the trained predictive model 103 to the one or more fields in the change record 102. The risk score is indicative of the likelihood of change-induced computing environment failure or malfunction. If the calculated risk score is above a predetermined threshold, the method raises a flag 104 to the change request 101 to notify a user. This flagging mechanism allows users to be alerted to potential high-risk changes, enabling them to take appropriate action to mitigate the risk, such as further review, additional testing, or postponing the change until a safer time.

The predetermined threshold for raising a flag may be set based on various factors, such as the specific requirements of the computing environment, the desired level of risk tolerance, and the historical performance of the predictive model. The method may also include determining a risk level for the change, such as high risk, medium risk, low risk, or minimal risk, based on the calculated risk score and one or more predetermined thresholds. This risk level information can be used to inform decision-making and prioritisation of changes within the computing environment.

### Method for Flagging Risk when Handling Updates to a Computing Environment

This section provides a detailed description of the method steps illustrated in the flowchart of Figure 2, which represents the computer-implemented method for flagging risk when handling updates to a computing environment.

As shown in Figure 2, the method steps include receiving a change request (step 201), receiving or extracting a change record associated with a change request (step 202), applying a change record to a trained predictive model to calculate a risk score (step 203), and if the risk score exceeds a threshold, raising a flag (step 204).

In one example, the method begins with step 201, receiving a change request comprising one or more change features associated with a change in hardware and/or software within the computing environment. The change request may be submitted by a user, such as an administrator or a developer, who intends to make changes to the computing environment. The change request may include information about the proposed change, such as the type of change, the components affected by the change, and the potential impact of the change on the computing environment. By receiving the change request, the method can initiate the process of assessing the risk associated with the proposed change and determine whether it is safe to proceed with the change or if further review is necessary.

Next, the method proceeds to step 202, receiving a change record associated with the change request. For the avoidance of doubt, whilst steps 201 and 202 have been shown as two distinct steps, these steps could be combined into a single step, whereby the change request and the change record are received simultaneously.

The change record comprises one or more fields corresponding to the one or more change features characterising the change in hardware and/or software within the computing environment. The change record may be generated automatically based on the information provided in the change request or may be manually created by a user. The change record may include various fields, such as change category, impact on product or disaster recovery, number of computing environment portions impacted, number of user groups impacted, number of assignees or assignee groups, number of configuration items impacted, number of service offerings affected, and other relevant fields. By receiving the change record, the necessary data to evaluate the risk associated with the proposed change using the trained predictive model can be obtained.

Next, the method involves step 203, calculating a risk score for the change by applying a trained predictive model to the one or more fields in the change record. The trained predictive model may be an explainable boosting machine model or any other suitable machine learning model that has been trained on a dataset comprising historical changes to the computing environment and their associated historical change records. The predictive model receives the fields in the change record as inputs and outputs a risk score, which is indicative of the likelihood of change-induced computing environment failure or malfunction. By calculating the risk score, the method can quantitatively assess the potential risk associated with the proposed change and determine whether it is safe to proceed with the change or if further review is necessary.

In some examples, if the calculated risk score 203 is above a predetermined threshold, the method proceeds to step 204 and raises a flag to the change request to notify a user. The predetermined threshold may be set based on historical data, industry standards, or other relevant factors. Raising a flag may involve outputting a notification via a user interface, sending an email or other communication to the user, or any other suitable method of alerting the user to the potential risk associated with the proposed change. The flag may indicate that the change request requires further review, approval, or modification before it can be safely implemented in the computing environment. By raising a flag when the calculated risk score is above the predetermined threshold, the method can help prevent potential failures or malfunctions in the computing environment due to risky changes and promote a more stable and reliable computing environment.

### Trained Predictive Model Components and Functionality

The trained predictive model is a component of the computer-implemented method for flagging risk when handling updates to a computing environment. This section provides a detailed description of the components and functionality of the trained predictive model, including its input fields, output risk score, model training and dataset, and the Application Programming Interface (API) layer.

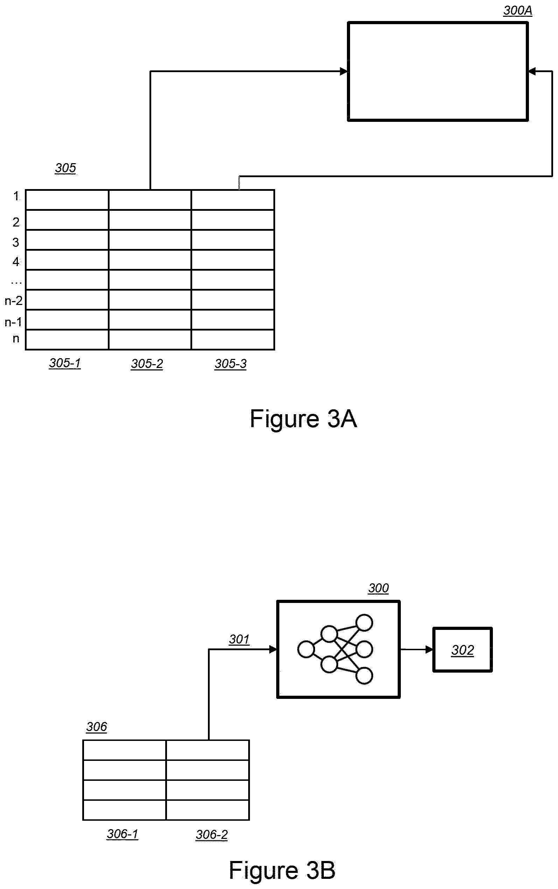

Figure 3A is a diagram depicting the training of an untrained predictive model 300A based on a set of training data 305. The training data 305 can include n number of entries, each entry including a historical change record 305-2, a risk score associated with the historical change record 305-3, and optionally the historical change request comprising one or more change features. The historical change records 305-2 can be used as input training data for training the untrained predictive model, and the associated risk scores can be used as the labels of the training data for training the untrained predictive model in a supervised manner.

Figure 3B is a schematic representation of the trained predictive model 300 used in the method for calculating a risk score. The predictive model receives fields in a change record as inputs 301 and outputs a risk score 302. The model is trained on a dataset comprising historical changes to the computing environment and their associated historical change records.

With reference to Figure 3A and 3B, the trained predictive model 300 receives one or more fields in a change record as inputs 301. These fields correspond to the one or more change features associated with a change in hardware and/or software within the computing environment. The change features may include, but are not limited to, change categories, impact on product or disaster recovery, impact on computing environment portions and user groups, and impact on assignees, configuration items, and services.

The trained predictive model 300 processes the input fields and outputs a risk score 302. The risk score is indicative of the likelihood of change-induced computing environment failure or malfunction. The risk score can be used to determine the risk level of the change identified by the change request, as well as to raise a flag if the calculated risk score is above a predetermined threshold.

The use of the trained predictive model to calculate a risk score based on the input fields provides several advantages. For example, it allows for a more accurate assessment of the potential risks associated with a change in the computing environment. This can help to minimize the occurrence of change-induced failures or malfunctions, thereby improving the overall stability and reliability of the computing environment.

In some examples, the trained predictive model 300 is trained by providing an untrained predictive model 300A a dataset comprising historical changes to the computing environment and their associated historical change records. This dataset may include information about the change features, such as the change categories, impact on product or disaster recovery, impact on computing environment portions and user groups, and impact on assignees, configuration items, and services. The dataset may also include a risk score, which can correspond to information about the outcomes of the historical changes, such as whether they resulted in computing environment failures or malfunctions.

By training the predictive model on this dataset, the model can learn to recognise patterns and relationships between the change features and the likelihood of change-induced failures or malfunctions. This enables the model to make more accurate predictions about the potential risks associated with a given change in the computing environment.

The use of a trained predictive model that has been trained on a dataset comprising historical changes and their associated change records provides several advantages. For example, it allows for a more data-driven and evidence-based approach to risk assessment, which can help to improve the accuracy and reliability of the risk scores generated by the model. Additionally, by continually updating the dataset with new information about changes and their outcomes, the model can be continually refined and improved over time, further enhancing its predictive capabilities.

In some examples, the trained predictive model 300 comprises an Application Programming Interface (API) layer. The API layer is configured to enable one or more applications or services to perform various functions related to the predictive model, such as sending input data to the model, retrieving results from the model, monitoring the performance of the model, and adjusting one or more parameters of the model.

The use of an API layer in the trained predictive model provides several advantages. For example, it allows for greater flexibility and ease of integration with other systems and applications within the computing environment. This can help to streamline the process of implementing the computer-implemented method for flagging risk when handling updates to the computing environment, as well as to facilitate the ongoing maintenance and improvement of the predictive model.

Furthermore, the API layer may enable the trained predictive model to be more easily adapted and customised to suit the specific needs and requirements of different computing environments. This can help to ensure that the model remains relevant and effective in a wide range of different contexts and use cases.

### Change Features and Corresponding Fields in a Change Record

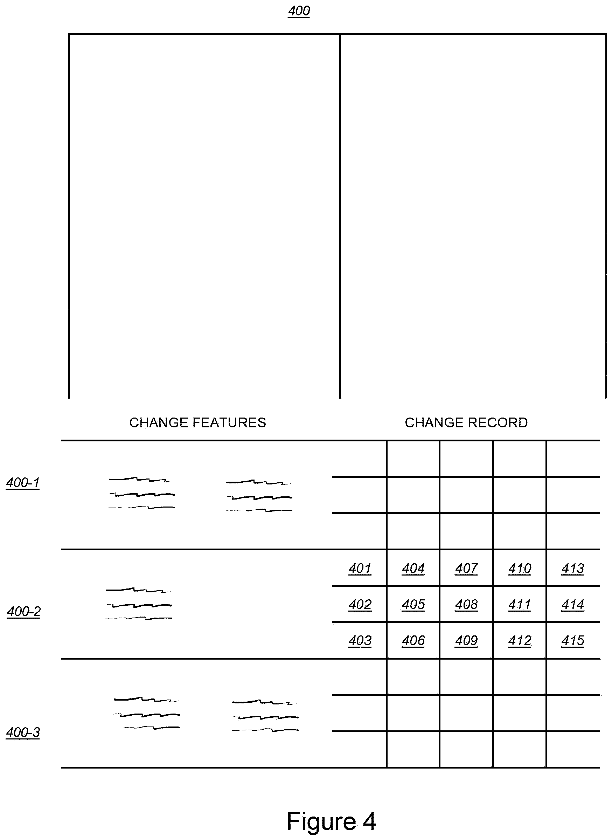

This section provides, with reference to Figure 4, a description of various change features and their corresponding fields in a change record, which are used in the computer-implemented method for flagging risk when handling updates to a computing environment. The change features and fields characterise the changes in hardware and/or software within the computing environment and serve as inputs to the trained predictive model for calculating risk scores.

Figure 4 is a table 400 showing examples of change features and their corresponding fields in a change record. The table includes 3 separate entries 400-1, 400-2, and 400-3, one for a respective change request. It is to be understood that any number of change request entries can be present in table 400. For each change record, there can be provided a number of fields, including but not limited to: change categories 401, product or disaster recovery impact 402, number of computing environment portions impacted 403, number of user groups impacted 404, number of assignees or assignee groups 405, number of configuration items impacted 406, number of service offerings affected 407, number of services impacted 408, number of approval services impacted 409, highest resilience level of a service affected 410, highest criticality level of an application affected 411, fraction of previous unsuccessful changes 412, number of previous changes carried out 413, indication of whether the change is automated 414, and number of recent incidents associated with changes 415.

Whilst the fields in the change record are provided with respect to entry 400-2, it may be understood that the other entries in the table would also have corresponding change records with variables. It may also be understood that only a subset of the fields 401 to 415 can be present in each change record, or alternatively, where a value for a certain field has not been provided, an indication of no value could be present for the specific field in the change record.

The features in the fields can be represented by numerical or categorical data, which can be received by the predictive model (e.g. an EBM model) and processed accordingly.

In one example, the change features may include a change category, which can be one of several types, such as adding or installing, user permissions, third party related, retiring or decommissioning, resource uplift, reboot, recycle, restart, physical access, patching, and application install 401. These change categories provide a high-level classification of the changes in the computing environment, allowing the trained predictive model to better understand the nature of the change and its potential impact on the system.

In some examples, the change features may comprise information about whether a product or disaster recovery is impacted by the respective change 402. This information is for assessing the potential consequences of the change on the overall functioning of the computing environment and its ability to recover from potential failures or malfunctions. By considering the impact on product or disaster recovery, the trained predictive model can more accurately calculate the risk score associated with the change.

In one example, the change features may include the number of computing environment portions impacted by the respective change 403 and the number of computing environment user groups impacted by the respective change 404. These features provide insight into the extent of the change's influence on the computing environment and its users. A change that affects a large number of portions or user groups may have a higher risk score, as it could potentially cause more significant disruptions or malfunctions in the computing environment.

In some examples, the change features may comprise the number of assignees or assignee groups of the respective change 405, the number of configuration items within the computing environment impacted by the respective change 406, the number of service offerings in the computing environment affected by the respective change 407, the number of services in the computing environment impacted by the respective change 408, and the number of approval services in the computing environment impacted by the respective change 409. These features provide a more detailed understanding of the change's impact on various aspects of the computing environment, allowing the trained predictive model to better assess the risk associated with the change.

Additionally, the change features may include the highest resilience level of a service affected by the respective change 410 and the highest criticality level of an application affected by the respective change 411. These features help the trained predictive model to evaluate the potential consequences of the change on the most and resilient components of the computing environment, which can be crucial for determining the overall risk score.

In some examples, the change features may also comprise the fraction of previous unsuccessful changes associated with the assignee or assignee group requesting the respective change 412, the number of previous changes carried out by the assignee or assignee group requesting the respective change 413, an indication of whether the change is an automated change 414, and the number of recent incidents associated with changes associated with the assignee or assignee group requesting the respective change 415. These features provide valuable information about the historical performance and reliability of the assignee or assignee group, which can be used by the trained predictive model to better estimate the risk score for the current change request.

By considering all these change features and their corresponding fields in a change record, the computer-implemented method for flagging risk when handling updates to a computing environment can more accurately and effectively assess the potential risks associated with changes in hardware and/or software. This, in turn, enables users to make more informed decisions about whether to proceed with the change, mitigate the risks, or explore alternative solutions, ultimately leading to a more stable and reliable computing environment.

### Risk Score and Predetermined Thresholds for Risk Levels

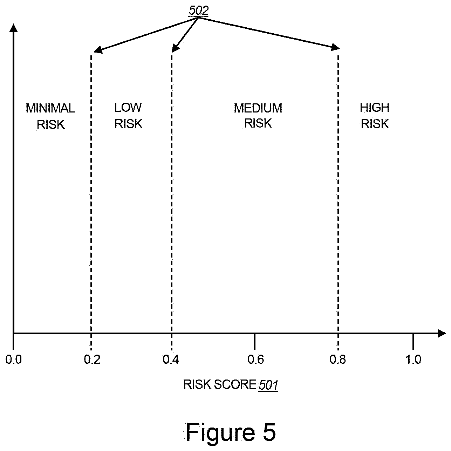

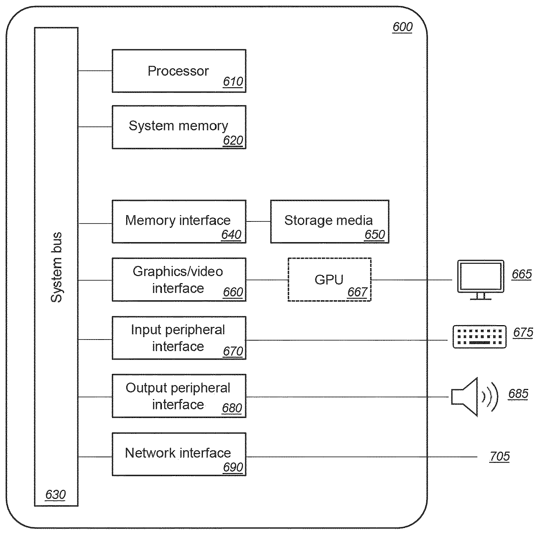

Figure 5 is a graph illustrating the relationship between calculated risk scores 501 and predetermined thresholds 502 for determining risk levels. The graph shows the risk levels as high risk, medium risk, low risk, and minimal risk based on the calculated risk score and the predetermined thresholds.

As shown in this figure, there are 4 categories of distinct risk level separated by predetermined thresholds (e.g. risk score above 40%, at least medium risk). Nevertheless, it is to be understood that any number of predetermined thresholds (i.e. at least two) can be present to discriminate between risk levels. For example, there could be a low risk category and a high risk category, or alternatively, there could be 5 or more distinct categories. It can also be understood that the specific thresholds can be varied as necessary (e.g. it could be determined that any risk score below 5% is minimal risk, but anything about this amount must be considered at least a low risk change).

The computer-implemented method for flagging risk when handling updates to a computing environment involves calculating a risk score for a change by applying a trained predictive model to one or more fields in a change record. The risk score is indicative of the likelihood of change-induced computing environment failure or malfunction. In some examples, the method further includes determining risk levels based on the calculated risk score and comparing it against one or more predetermined thresholds.

In one example, the method involves determining the risk level of the change identified by the change request based on the calculated risk score. The risk level can be determined as one of high risk, medium risk, low risk, and minimal risk by comparing the calculated risk score against one or more predetermined thresholds. These predetermined thresholds can be set based on historical data, expert knowledge, or a combination of both.

The use of predetermined thresholds allows for a more granular understanding of the potential risks associated with a change in the computing environment. This enables users to make more informed decisions when handling updates and can help prevent potential failures or malfunctions in the computing environment. Furthermore, the risk levels can be used to prioritise changes and allocate resources more effectively, ensuring that high-risk changes are addressed promptly and appropriately.

In some examples, each risk level is associated with a corresponding predetermined lead time. The method may comprise determining a lead time for the change associated with the change request based on the determined risk level. The lead time can be used to estimate the amount of time required to implement the change and mitigate any potential risks associated with it.

By associating lead times with risk levels, the method can help users better plan and schedule changes in the computing environment. This can lead to more efficient use of resources and minimize the potential for disruptions or downtime. Additionally, the lead times can be used to set expectations for stakeholders and ensure that adequate time is allocated for testing, validation, and other necessary activities related to the change.

In one example, if it is determined that the risk level of the change identified by the change request is high risk, raising a flag may comprise outputting a notification via a user interface. The notification can alert users to the potential risks associated with the change and prompt them to take appropriate action, such as reviewing the change in more detail, seeking additional approvals, or implementing additional safeguards.

The use of a user interface notification for high-risk changes can help ensure that users are aware of potential risks and can take appropriate action to mitigate them. This can lead to a more proactive approach to managing changes in the computing environment and can help prevent failures or malfunctions that could result from high-risk changes.

In summary, the methods of the invention for flagging risk when handling updates to a computing environment provide a robust and efficient way to assess the potential risks associated with changes in hardware and/or software. By calculating risk scores and determining risk levels based on predetermined thresholds, users can make more informed decisions when managing updates and mitigate potential risks more effectively. The association of lead times with risk levels and the use of user interface notifications for high-risk changes further enhance the method's ability to support effective change management in the computing environment.

### Computing Device Implementation

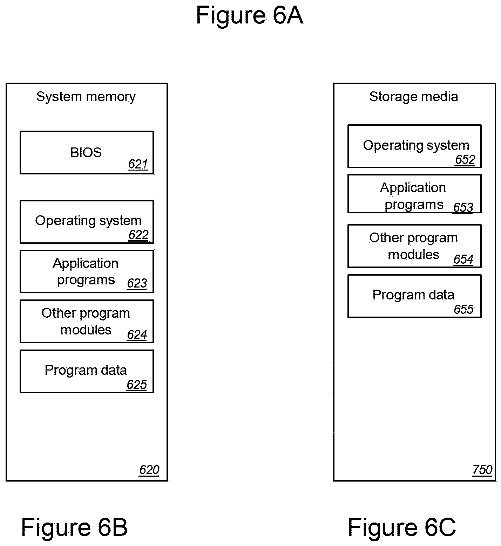

Figure 6A shows an example computing device 600 in which the methods of the invention may be implemented. Computing device 600 may be embodied as any type of computer, including a server, a desktop computer, a laptop, a tablet, a mobile device, or the like.

Components of computing device 600 include, but are not limited to, a processor 610, such as a central processing unit (CPU), system memory 620, and system bus 630. System bus 630 provides communicative coupling for various components of computing device 600, including system memory 620 and processor 610. System bus 630 may be or may include an address bus, data bus or control bus. Example system bus architectures include parallel buses, such as Peripheral Component Interconnect (PCI) and Integrated Drive Electronics (IDE), and serial buses, such as PCI Express (PCIe) and Serial ATA (SATA).

System memory 630 is formed of volatile and/or non-volatile memory such as read only memory (ROM) and random-access memory (RAM). ROM is typically used to store a basic input/output system (BIOS), which contains routines that boots the operating system and sets up the components of computing device 600, for example at start-up. RAM is typically used to temporarily store data and/or program modules that the processor 610 is operating on.

Computing device 600 includes other forms of memory, including (computer readable) storage media 645, which is communicatively coupled to the processor 610 through a memory interface 640 and the system bus 630. Storage media 645 may be or may include volatile and/or non-volatile media. Storage media 645 may be or may include removable or non-removable storage media. Storage media 645 may be within computing device 600 or external to computing device 600. Examples storage media 645 technologies include: semiconductor memory, such as RAM, flash memory, solid-state drives (SSD); magnetic storage media, such as magnetic disks; and optical storage, such hard disk drives (HDD) and CD, CD-ROM, DVD and BD-ROM. Data stored in storage medium 645 may be stored according to known methods of storing information such as computer readable instructions, data structures, program modules or other data, the form of which is discussed further herein.

In some embodiments, such as the one shown in Figure 6A, computing device 600 is communicatively coupled to an external display device 655 via a graphics/video interface 650 and system bus 630. Alternatively, computing device 600 may have an integrated display (not shown) which is communicatively coupled via the graphics/video interface 650 and system bus 630. Optionally, a graphical processing unit 657 (GPU) may be used in addition to improve graphical and other types of processing.

Computing device 600 also includes an input peripheral interface 660 and an output peripheral interface 670 that are communicatively coupled to the system bus 630. Input peripheral interface is communicatively coupled to one or more input devices 665, for interaction between the computing device 600 and a human operator. Example input devices 665 includes a keyboard, a mouse, a touchscreen, and a microphone. In some embodiments, the touchscreen and display may use the same screen. Output peripheral interface 670 is communicatively coupled to one or more output devices 675. Example output devices 675 includes speakers and a printer. The communicative coupling may be wired, such as via a universal serial bus (USB) port, or wireless, such as over Bluetooth.

Computing device 600 operates in a networked or distributed environment using at least one communication network 705 to one or more remote computers. The one or more remote computers may be a personal computer, a server, a router, a peer device, a mobile device, a tablet, or other common network node, and typically includes many or all of the components described above relative to computer system 600. The at least one communication network 705 typically includes at least the Internet. Other communication networks 705 may be used including a local area network (LAN) and/or a wide area network (WAN). Further communication networks may be present in various types of computing device 600, such as mobile devices and tablets, to cellular networks, such as 3G, 4G LTE and 5G. Computing device 600 establishes communication with network environment 700 through network interface 680. In a networked environment, program modules depicted relative to computer system 600, or portions thereof, may be stored in the remote memory storage device.

As shown in Figure 6B a number of program modules are stored on the system memory 620, including an operating system 622, one or more application programs 623, other program modules 624, and program data 625. Similarly, as shown in Figure 6C, storage media 650 stores one or more application programs 653, other program modules 654, and program data 655.

In one implementation, the methods of the invention may be implemented as an application program 623 that is stored in storage media 650. The advantage of implementing the methods of the invention in this way is that the application program 623 can be implemented on existing computing systems 600. However, in general, when implemented this way, the application program 623 usually has to be manually chosen to process processing tasks. Any input data or dataset may be received via network interface 690 and stored in the storage media 650. Any output data or dataset may be sent elsewhere via network interface 690. The processing of the steps in between are performed by processor 610 in conjunction with the application program 623. System memory 620 may be used to store temporary or transitory data relating to the application program 623.

In another implementation, the methods of the invention may be implemented in the operating system 622 that is stored on system memory 620.

The flow diagrams in the figures illustrate the architecture, functionality, and operation of possible implementations of the methods of the invention. In some alternative implementations, the steps noted in the figures may occur out of the order noted in the figures. For example, two steps shown in succession may, in fact, be performed substantially concurrently, or the blocks may sometimes be performed in the reverse order, depending upon the functionality involved.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims

It will be understood that the above description of is given by way of example only and that various modifications may be made by those skilled in the art. Although various embodiments have been described above with a certain degree of particularity, or with reference to one or more individual embodiments, those skilled in the art could make numerous alterations to the disclosed embodiments without departing from the scope of this invention.

### Exemplary Results of Predictive Model

### Variables of an Exemplary Model

The following table provides a list of the final variables used as features in a change record, for processing by the model. The advantages of why these features were selected is also provided.

**Table 1: Variables of an Exemplary Change Record**

| **Variable** | **Type of Variable** | **Reason Why Variable Selected** |
|---|---|---|
| Change Category | Categorical | Certain categories (e.g. App Release, Modifying) are inherently more risky |
| Prod/DR Impacted | Boolean | If Prod or DR is impacted, the change is likely to be riskier |
| Number of Environments impacted | Numerical | More impacted environments likely introduces more risk |
| Number of Departments Impacted | Numerical | More impacted departments likely introduces more risk |
| Assignment Group Count | Numerical | If many assignment groups are involved in the change, it implies greater change complexity |
| CI Count | Numerical | If many Cls are impacted, there will be more opportunity for the change to cause an issue |
| Service Offerings Affected | Numerical | More service offerings impacted mean more opportunity for the change to cause an issue |
| Number of Services impacted | Numerical | More services impacted means more opportunity for the change to cause a downstream issue |
| Number of Approval Services | Numerical | Approval Services have a more direct impact by the change |
| Highest Res Cat of Affected Services | Numerical | Changes affecting higher res cat services are likely to cause more severe issues |
| Highest App Criticality of apps affected | Numerical | Changes affecting more critical services are likely to cause more severe issues |
| Fraction of changes which were closed as 'Not Implemented'/'Successful'/'Successful - Assisted' /'Unsuccessful - No Service Impact'/'Unsuccessful - Service Impact' by the change assignment group/assignee in the past 90 days | Numerical | Teams/assignees with poor track records likely have a poor change process in place and would be expected to cause more issues in the future |
| Number of changes carried out by changes assignment group/assignee in the past 90 days | Numerical | Teams/assignees carrying out a lot of changes have a higher workload and are more likely to introduce risk |
| Assigned to System Account | Boolean | System changes are automated and so are expected to have a lower risk |
| Recent Major Incidents | Numerical | Teams causing more incidents recently are likely to pose a greater risk in future |

### Model Parameters

After tuning the model features using a grid search where the goal was to optimise the number of incident-causing changes in the top 5% of scores, the following model hyperparameter features were obtained for a boosting tree model and/or an explainable boosting tree model:

**Table 2: Hyperparameters Values**

| **Parameter Name** | **Tested Values** | **Final Value** | **Type** |
|---|---|---|---|
| Interactions | [0, 1] | 0 | Model Param |
| Min_frac | [0, 0.01] | 0.01 | Feature Engineering Param |

For the avoidance of doubt, any parameter not explicitly mentioned here has the default value for a boosting tree model and/or an explainable boosting tree model.

Monotonic constraints were also applied to several features. For example, a change impacting 10 services but the same in all other regards should always be as risky or risker than one impacting 9 services. These constraints were applied to the following features: Assignment Group Count, Service Count, Recent Major Incidents, Cl Count, Highest Res Cat Affected, Highest App Crit Affected, Service Offerings Affected, Number of Departments Affected, Number of Environments Affected, Number of Approval Services, Proportion of Unsuccessful changes (for Assignee and Assignment Group respectively) in the last 90 days.

### Feature Importance:

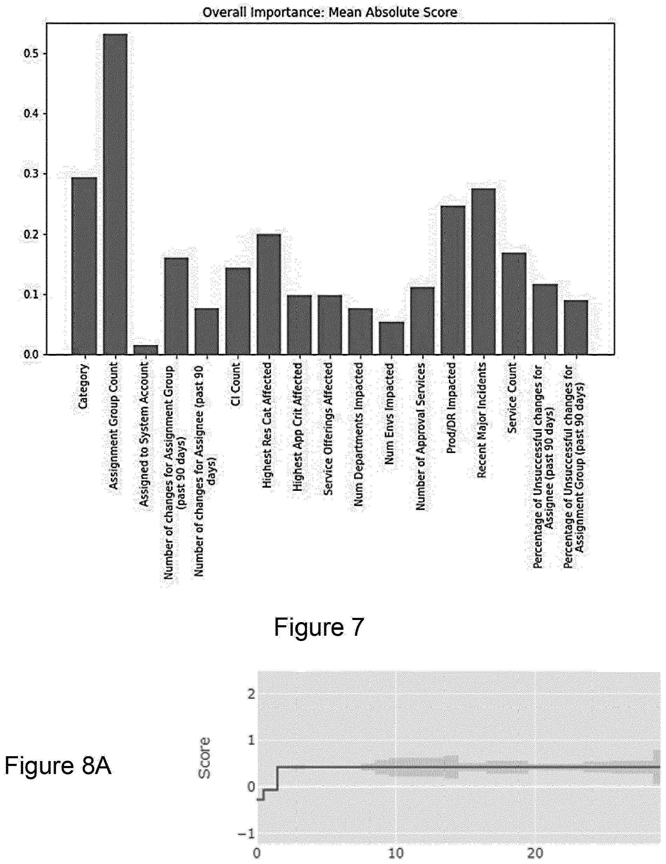

Feature importance was measured using the EBM global explanation method, and the results are shown in Figure 7.

In Figure 7, the top 17 features from the model are shown along with the overall global risk contribution for each feature. The taller the bar, the more that particular feature contributes to the model predictions overall. So it is clear, for example, that the Assignment Group Count and Category features tend to influence model outputs more than the Assigned to System Account and Num Envs Impacted features.

The exact feature importance extracted from this example is also provided in Table 3 below.

**Table 3: Feature Importance from Exemplary, Trained Explainable Boosting Model**

| **Feature** | **Importance** |
|---|---|
| Assignment Group Count | 0.532 |
| Category | 0.293 |
| Recent Major Incidents | 0.275 |
| Prod/DR Impacted | 0.246 |
| Highest Res Cat Affected | 0.200 |
| Service Count | 0.169 |
| Number of changes for Assignment Group (past 90 days) | 0.160 |
| Cl Count | 0.144 |
| Percentage of Unsuccessful changes for Assignee (past 90 days) | 0.116 |
| Number of Approval Services | 0.111 |
| Service Offerings Affected | 0.099 |
| Highest App Crit Affected | 0.098 |
| Percentage of Unsuccessful changes for Assignment Group (past 90 days) | 0.089 |
| Number of changes for Assignee (past 90 days) | 0.076 |
| Number of Departments Impacted | 0.075 |
| Number of Environments impacted | 0.054 |
| Assigned to System Account | 0.015 |

### Shape functions

Plotting the shape function of the continuous features against the feature value for all of the training dataset shows how changing that feature will affect the risk score produced by the model. For example, in the plots for Assignment Group Count and Recent Major Incidents shown below, the score value on the y axis is the value contributed to the model (where positive score values indicate a riskier change).

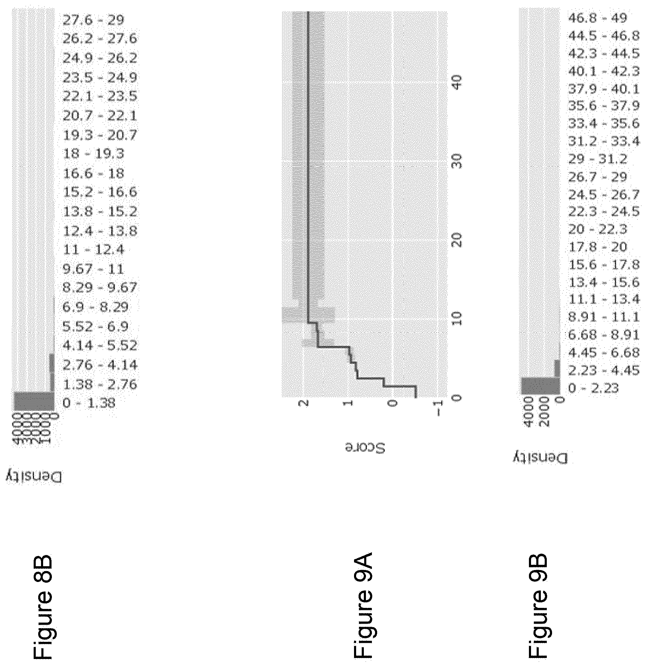

Figure 8A shows a shape function for Recent Major Incidents feature vs. feature value runs along the x axis. Figure 8B then provides a density plot that shows the frequency at which this feature takes certain values.

Figure 9A shows a shape function for Assignment Group Count feature vs. feature value runs along the x axis. Figure 9B then provides a density plot that shows the frequency at which this feature takes certain values.

### Performance

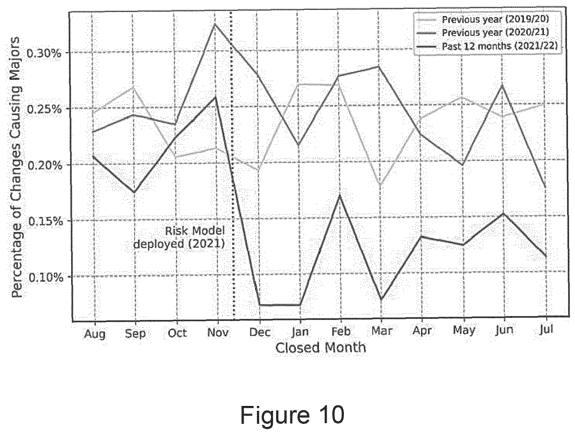

Model performance since deployment has been assessed firstly by looking at how the percentage of changes causing major incidents has evolved over time. Figure 10 demonstrates that since the introduction of the machine learning risk model, this percentage has dropped markedly from a baseline of around 0.20-0.25% (using the old original model) to between 0.10-0.15%. This represents an approximate halving in the rate at which changes cause major incidents. Additionally, the percentage of Minimal and Low risk Prod/DR changes causing major incidents has dropped from 0.14% to 0.05% since deployment. This illustrates that the model is correctly identifying the riskiest changes and placing them into the moderate and high risk bandings.

## Claims

1. A computer-implemented method for flagging risk when handling updates to a computing environment, the method comprising:
receiving a change request comprising one or more change features associated with a change in hardware and/or software within the computing environment,
receiving a change record associated with the change request, the change record comprising one or more fields corresponding to the one or more change features, wherein the one or more fields corresponding to the one or more change features characterise the change in hardware and/or software within the computing environment;
calculating a risk score for the change by applying a trained predictive model to the one or more fields, the predictive model having been trained on a dataset comprising historical changes to the computing environment and their associated historical change records, wherein the risk score is indicative of a likelihood of change-induced computing environment failure or malfunction; and
if the calculated risk score is above a predetermined threshold, raising a flag to the change request to notify a user.

2. The method according to claim 1, wherein the one or more fields in the change record include at least one of:
a change category,
whether a product or disaster recovery is impacted,
a number of computing environment portions impacted by the respective change,
a number of computing environment user groups impacted by the respective change,
a number of assignees or assignee groups of the respective change,
a number of configuration items within the computing environment impacted by the respective change,
a number of service offerings in the computing environment affected by the respective change,
a number of services in the computing environment impacted by the respective change,
a number of approval services in the computing environment impacted by the respective change,
a highest resilience level of a service affected by the respective change,
a highest criticality level of an application affected by the respective change,
a fraction of previous unsuccessful changes associated with the assignee or assignee group requesting the respective change,
a number of previous changes carried out by the assignee or assignee group requesting the respective change,
an indication of whether the change is an automated change, and
a number of recent incidents associated with changes associated with the assignee or assignee group requesting the respective change.

3. The method according to claim 2, wherein a change category is one of: adding or installing; user permissions; third party related; retiring or decommissioning; resource uplift; reboot, recycle, restart, physical access, patching, and application install.

4. The method according to any one of the preceding claims, further comprising determining, based on the calculated risk score for the change associated with the change request, a risk level of the change identified by the change request.

5. The method according to claim 4, wherein determining the risk level of the change identified by the change request comprises determining the risk level as one of: high risk, medium risk, low risk, and minimal risk by comparing the calculated risk score against one or more predetermined thresholds.

6. The method according to claim 5, wherein each risk level is associated with a corresponding predetermined lead time, and the method further comprises determining a lead time for the change associated with the change request based on the determined risk level.

7. The method according to claim 5 or claim 6, wherein if it is determined that the risk level of the change identified by the change request is high risk, raising a flag comprises outputting a notification via a user interface.

8. The method according to any one of the preceding claims, wherein the predictive model comprises an Application Programming Interface (API) layer, the API layer being configured to enable one or more applications or services to perform at least one of: sending input data to the predictive model, retrieving results from the predictive model, monitor the performance of the predictive model, and adjust one or more parameters of the predictive model.

9. The method according to any one of the preceding claims,
wherein the predictive model is configured to perform a classification of the change request, the classification being a prediction of whether or not a change-induced computing environment failure or malfunction will occur, and
wherein the calculated risk score is a prediction accuracy metric corresponding to a confidence that a classification that a change-induced computing environment failure or malfunction will occur is correct.

10. The method according to claim 9, further comprising calculating a non-risk score for the change by applying the trained predictive model to the one or more fields, wherein the risk score is a second prediction accuracy metric corresponding to a confidence that a classification that a change-induced computing environment failure or malfunction will not occur is correct.

11. The method according to any one of the preceding claims, wherein the predictive model comprises a boosting machine model, optionally wherein the boosting machine model is an explainable boosting machine model.

12. The method according to any one of the preceding claims, wherein the historical changes to the computing environment and their associated historical change records that are used to train the predictive model have associated historical failure scores used to train the model, optionally wherein the historical failure scores are Boolean values indicating whether or not a respective historical change caused a change-induced computing environment failure or malfunction.

13. The method according to claim 12, wherein the historical failure scores are weighted based on an impact caused by the historical change.

14. A computing environment comprising:
one or more computing systems communicatively coupled to each other; and
at least one processing system configured to perform the steps of any preceding claim.

15. A computer-readable medium comprising instructions which, when processed by at least one processing system, cause the processing system to perform the steps of any of claims 1 to 13.
